# EUROPEAN PATENT APPLICATION

(11) **EP 4 708 568 A1**
(43) Date of publication of application: **11.03.2026**
(21) Application number: 24800205.7
(22) Date of filing: 26.04.2024
(51) Int. Cl.: H01Q 3/32, H01P 1/18, H02K 7/116

(54) **PHASE CONVERTING APPARATUS**

(30) Priority: 04.05.2023 KR 20230058157
(71) Applicant: KMW Inc., Hwaseong-si, Gyeonggi-do 18462 (KR)
(72) Inventor: SEO, Yong Won, Hwaseong-si Gyeonggi-do 18442 (KR); KIM, Myung Hwa, Hwaseong-si Gyeonggi-do 18462 (KR); PARK, Jang Soon, Hwaseong-si Gyeonggi-do 18463 (KR); KANG, Seong Man, Hwaseong-Si Gyeonggi-do 18430 (KR); SHIN, Dong Hee, Incheon 21393 (KR)
(74) Representative: impuls legal PartG mbB
(86) International application number: PCT/KR2024/005671
(87) International publication number: WO 2024/228521

(57) **Abstract**

According to an embodiment of the present disclosure, provided is a phase shifter comprising: at least one base panel extending in a longitudinal direction; at least one wall panel extending from at least one of both opposing sides in a transverse direction of each of the at least one base panel in a direction parallel to a height direction perpendicular to the at least one base panel; at least one support body fixed to one surface of each of the at least one base panel; at least one feed line supported by the at least one support body so as to be spaced apart from one surface of each of the at least one base panel in the height direction; and at least one dielectric configured to be movable in a direction parallel to the longitudinal direction, wherein at least a portion of each of the at least one dielectric is disposed between each of the at least one wall panel and each of the at least one feed line.

## Description

### [Technical Field]

The present disclosure relates to a phase shifter.

### [Background Art]

The content described in this section merely provides background information on the present disclosure and does not constitute the prior art.

In the antenna device, forming a beam in a horizontal direction is most efficient in terms of coverage, but in some cases, the beam angle needs to be adjusted in a vertical direction for reasons such as interference or loss. In this case, the beam angle of the antenna device in the vertical direction is adjusted through a mechanical beam tilt scheme or an electrical beam tilt scheme.

The mechanical beam tilt scheme is a scheme of adjusting a beam angle by directly installing an antenna device so as to be inclined downwardly. Although this scheme is a simple scheme, this scheme is somewhat cumbersome for various reasons, such as a worker's on-site visit and power cut-off during work.

The electric beam tilt scheme is a scheme based on a multi-line phase shifter (MLPS). Specifically, in the electric beam tilt scheme, a beam angle is adjusted by feed signals having different phases to a plurality of vertically arranged radiation elements.

In order to implement the electric beam tilting scheme, a phase shifter may be provided in the antenna device. The phase shifter appropriately delays an input signal to generate a phase difference between the input signal and the output signal. In this regard, the delay of the input signal may be implemented by changing a length of the transmission line or changing a signal transmission speed in the transmission line.

Meanwhile, recently, as a base station or a relay of a mobile communication system, a multi-band frequency antenna device capable of serving various bands has been widely used. The multi-band antenna device needs to individually adjust phases of several band frequencies. Accordingly, the number of phase shifters provided in the antenna device may be increased, and accordingly, the phase shifter needs to be further reduced in size and lightweight.

In this situation, when a dielectric is placed on a pattern on a printed circuit board (PCB) as in the related art, a dielectric constant thereof becomes very high. For this reason, a material such as a ceramic material is additionally disposed, which has a problem of increasing an overall unit cost and weight of the phase shifter.

### [Disclosure]

### [Technical Problem]

Accordingly, the present disclosure is to solve these problems, and a main purpose of the present disclosure is to provide a phase shifter in which an influence of a dielectric on an antenna element is minimized and an advantage in terms of a process is achieved by sufficiently utilizing a ground surface of the antenna element so that the antenna element and the dielectric are spaced away from each other.

### [Technical Solution]

In order to achieve the above purpose, in accordance with one embodiment of the present disclosure, there is provided a phase shifter including at least one base panel extending in a longitudinal direction; at least one wall panel extending from at least one of both opposing sides in a transverse direction of each of the at least one base panel in a direction parallel to a height direction perpendicular to the at least one base panel; at least one support body fixed to one surface of each of the at least one base panel; at least one feed line supported by the at least one support body so as to be spaced apart from one surface of each of the at least one base panel in the height direction; and at least one dielectric configured to be movable in a direction parallel to the longitudinal direction, wherein at least a portion of each of the at least one dielectric is disposed between each of the at least one wall panel and each of the at least one feed line.

### [Advantageous Effects]

As described above, according to the present embodiment, the antenna element and the dielectric are spaced away from each other by fully utilizing the ground surface of the antenna element, thereby minimizing the influence of the dielectric on the antenna element and achieving an advantage in terms of the process.

### [Description of Drawings]

FIG. 1 is an assembled perspective view and an enlarged view of some components of a phase shifter according to an embodiment of the present disclosure.
FIG. 2 is an exploded perspective view of a portion of a phase shifter according to an embodiment of the present disclosure.
FIG. 3 is a cross-sectional view of the phase shifter of FIG. 1 taken along a A-A' direction.
FIG. 4 is a cross-sectional view of the phase shifter of FIG. 1 taken along a B-B' direction.
FIG. 5 is a perspective view illustrating a base panel of a phase shifter according to another embodiment of the present disclosure.
FIG. 6 is a side view of the base panel of FIG. 5.
FIG. 7 is a perspective view illustrating a base panel of a phase shifter according to still another embodiment of the present disclosure.
FIG. 8 is a side view of the base panel of FIG. 7.

### [Mode for Invention]

Hereinafter, some embodiments of the present disclosure will be described in detail with reference to the accompanying drawings. It is to be noted that in giving reference numerals to components of each of the accompanying drawings, the same components will be denoted by the same reference numerals even though they are illustrated in different drawings. Further, in describing exemplary embodiments of the present invention, well-known functions or constructions will not be described in detail since they may unnecessarily obscure the understanding of the present invention.

Terms 'first', 'second', i), ii), a), b), and the like, will be used in describing components according to embodiments of the present disclosure. These terms are only for distinguishing the components from other components, and the nature, sequence, order, or the like of the components are not limited by the terms. Throughout the present specification, unless explicitly described to the contrary, "including" or "comprising" any components will be understood to imply the inclusion of other elements rather than the exclusion of any other elements.

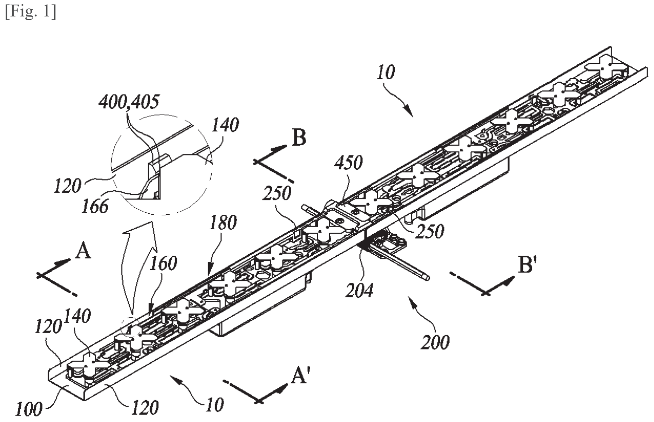

FIG. 1 is an assembled perspective view and an enlarged view of some components of a phase shifter according to an embodiment of the disclosure.

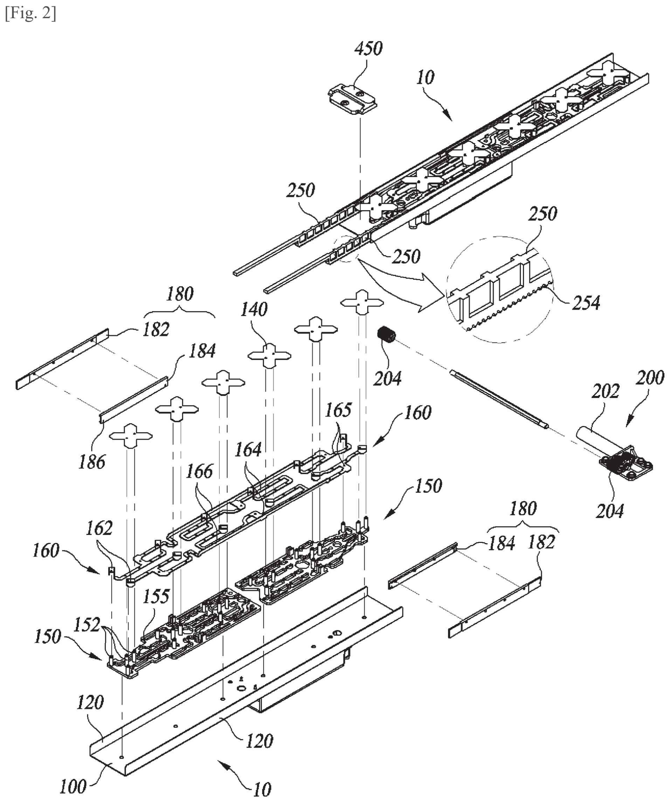

FIG. 2 is an exploded perspective view of a portion of a phase shifter according to an embodiment of the present disclosure.

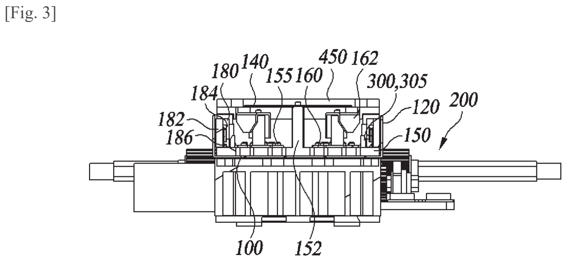

FIG. 3 is a cross-sectional view of the phase shifter of FIG. 1 taken along the A-A' direction.

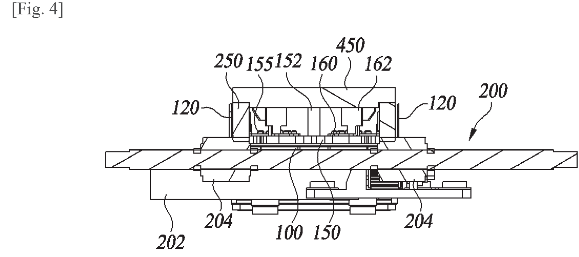

FIG. 4 is a cross-sectional view of the phase shifter of FIG. 1 taken along the B-B' direction.

Referring to FIGS. 1 to 4, a phase shifter 10 according to an embodiment of the disclosure includes all or some of at least one base panel 100, at least one wall panel 120, at least one radiation element 140, at least one support body 150, at least one feed line 160, at least one dielectric 180, a driving unit 200, and a pair of guide units 250.

The at least one base panel 100 extends in a longitudinal direction. In this regard, the longitudinal direction may mean, for example, a direction parallel to the X-axis in FIGS. 1 and 2, and in this case, the at least one base panel 100 may extend in an elongate manner along the direction parallel to the X-axis.

In FIGS. 1 and 2, the at least one base panel 100 is illustrated as including two base panels 100 spaced apart from each other in the longitudinal direction, but the at least one base panel 100 may include one base panel or three or more base panels.

Hereinafter, it is assumed that the at least one base panel 100 includes one base panel or two base panels. However, even when at least one base panel 100 is composed of three or more base panels, the following descriptions may be equally applied thereto.

For example, when the two base panels 100 as shown in FIGS. 1 and 2 are defined as one group, several groups may be arranged in a transverse direction perpendicular to the longitudinal direction. In this regard, the transverse direction may mean a direction parallel to the Y-axis in FIGS. 1 and 2.

The at least one wall panel 120 extends from at least one of both opposing sides in a transverse direction of each of the at least one base panel 100 in a direction parallel to a height direction perpendicular to the at least one base panel 100. In this regard, the height direction may mean a direction parallel to the Z-axis in FIGS. 1 and 2.

Referring to FIGS. 1 to 4, the at least one wall panel 120 is illustrated as including a pair of wall panels 120 spaced apart from each other in the transverse direction, but the present disclosure is not limited thereto, and the at least one wall panel 120 may include one wall panel. However, hereinafter, it is assumed that the at least one wall panel 120 include a pair of wall panels 120.

The pair of wall panels 120 may extend in an elongate manner in the longitudinal direction, and may be preferably integrally formed with each of the at least one base panel 100.

In this case, each of the pair of wall panels 120 may be formed by bending at least a portion of each of the at least one base panel 100, and accordingly, the thickness in the transverse direction of each of the pair of wall panels 120 may be the same as the thickness in the height direction of each of the at least one base panel 100. However, the present disclosure is not necessarily limited thereto. For example, each of the pair of wall panels 120 may be formed so as to be bonded to each of both opposing sides of each of the at least one base panel 100.

In one example, according to the present disclosure, each of the at least one base panel 100 and the pair of wall panels 120 may be preferably made of metal. Accordingly, the phase shifter 10 according to an embodiment of the disclosure may include components such as at least one support body 150 and at least one feed line 160 to be described later.

The at least one radiation element 140 may be disposed on each of the at least one base panel 100, for example, may be disposed between the pair of wall panels 120. The at least one radiation element 140 may transmit and receive radio waves and radiate high frequency and low frequency signals.

The at least one radiation element 140 may include a plurality of radiation elements 140, and in this case, the plurality of radiation elements 140 may be arranged in the longitudinal direction so as to be spaced from each other by the same spacing while being disposed on each of the at least one base panel 100.

The at least one support body 150 is disposed between the pair of wall panels 120 and fixed to one surface of each of the at least one base panel 100. Each of the at least one support body 150 may support the at least one feed line 160 to be described later. In this case, the at least one support body 150 may serve as a dielectric material.

Referring to FIGS. 1 and 2, although the at least one support body 150 is composed of two supports 150 disposed on one base panel 100, the present disclosure is not necessarily limited thereto. In another example, one support 150 or three or more supports 150 may be formed on one base panel 100.

In addition, each of the at least one support body 150 may support the at least one radiation element 140. For example, in FIGS. 1 and 2, it is illustrated that one support 150 supports three radiating elements 140, but the number of radiating elements 140 supported by one support 150 is not necessarily limited thereto.

Each of the at least one support body 150 may include at least one support column 152 corresponding to each of the at least one radiation element 140 and extending in the height direction and configured such that an upper portion thereof is coupled to the at least one radiation element 140 so as to support the at least one radiation element 140.

For example, the at least one support column 152 may pass through at least a portion of the corresponding radiating element 140 and be coupled thereto, and accordingly, a position of the at least one radiating element 140 may be safely maintained.

In FIGS. 1 and 2, four support columns 152 are illustrated as corresponding to one radiation element 140, but the number of support columns 152 corresponding to one radiation element 140 is not necessarily limited thereto as long as the radiation element 140 can be supported thereon.

In one example, for example, when four support columns 152 constitute one group, it may be preferable that the number of support column groups be the same as the number of at least one radiation element 140.

The at least one feed line 160 is supported on at least one support body 150 so as to be spaced apart from one surface of each of the at least one base panel 100 in the height direction. Each of the at least one feed line 160 may be connected to at least one input port (not shown) and a plurality of output ports (not shown). In addition, each of the at least one feed line 160 may receive an antenna signal from an antenna cable and provide a movement path of the antenna signal.

Referring to FIGS. 1 to 4, the at least one feed line 160 is illustrated as including a pair of feed lines 160 spaced apart from each other in the transverse direction, but the present disclosure is not limited thereto. The at least one feed line 160 may include one feed line. However, hereinafter, it is assumed that the at least one feed line 160 includes a pair of feed lines 160.

Each of the pair of feed lines 160 may include at least one fixing protrusion 162 configured such that at least a portion thereof protrudes in the height direction and is fixedly disposed between each of the at least one radiation element 140 and each of the at least one support body 150.

Specifically, when each of the at least one support body 150 and each of the at least one radiation element 140 are coupled to each other, the fixing protrusion 162 may be positioned between each of the at least one support body 150 and each of the at least one radiation element 140. To this end, at least a portion of each support 150, for example, at least a portion of the support column 152, may be configured to pass through the fixing protrusion 162. However, the present disclosure is not necessarily limited thereto.

Accordingly, the pair of feed lines 160 may be supported via the coupling of each of the at least one radiation element 140 and each of the at least one support body 150 to each other.

In order to more firmly support the pair of feed lines 160, each of the at least one support body 150 may include at least one first coupling protrusion 155, and each of the pair of feed lines 160 may include at least one first coupling hole 165.

For example, at least one first coupling protrusion 155 protruding from the upper surface of each of the at least one support body 150 is coupled to the at least one first coupling hole 165, so that the at least one support body 150 may support the pair of feed lines 160. In this case, it is preferable that the number of the at least one first coupling protrusion 155 is the same as the number of the first coupling holes 165 included in the pair of feed lines 160 and the positions thereof correspond to each other.

However, the present disclosure is not limited to the configuration that the coupling protrusion is formed on the support 150 and the coupling hole is defined in the feed line 160. On the contrary, the coupling hole may be defined in the support 150 and the coupling protrusion may be formed on the feed line 160.

The at least one dielectric 180 may be configured to be movable in a direction parallel to the longitudinal direction, and at least a portion of each of the at least one dielectric 180 may be disposed between each of the at least one wall panel 120 and each of the at least one feed line 160.

Referring to FIGS. 1 to 4, the at least one dielectric 180 is illustrated as including a pair of dielectrics 180 spaced apart from each other in the transverse direction. However, the present disclosure is not necessarily limited thereto, and the at least one dielectric 180 may include only one dielectric having at least a portion disposed between one wall panel 120 and one feed line 160. However, hereinafter, it is assumed that at least one dielectric 180 includes a pair of dielectrics 180.

As at least a portion of each of the pair of dielectrics 180 moves in the longitudinal direction while being positioned between each of the pair of wall panels 120 and each of the pair of feed lines 160, the contact position of the dielectric with respect to the feed line may be changed. Accordingly, the electrical length of the transmission line through which the electrical signals pass may be reduced or lengthened, and thus the difference between the phases of the signals may be adjusted.

In addition, since the phase may be adjusted even without using a separate movable circuit board, the overall size of the phase shifter 10 may be reduced in terms of a structure.

Each of the pair of feed lines 160 may include a feed base portion 164 and a feed wall 166. In this regard, the feed base portion 164 may extend in the longitudinal direction parallel to the base panel 100, and the feed wall 166 may extend in a direction parallel to the height direction from at least one side in the transverse direction of the feed base portion 164.

The feed wall 166 may be formed by bending at least a portion of the feed base portion 164, and accordingly, the transverse thickness of the feed wall 166 may be the same as the thickness in the height direction of the feed base portion 164. However, the present disclosure is not limited thereto. For example, the feed wall 166 may be formed in a manner of being bonded to one side of the feed base portion 164.

At least a portion of each of the pair of dielectrics 180 may be disposed between the feed wall 166 and each of the pair of wall panels 120, and may move longitudinally while being disposed therebetween.

In one example, in order to efficiently adjust the phase difference, the feed walls 166 respectively included in the pair of feed lines 160 may be spaced apart from each other in a direction parallel to the transverse direction, and each of the feed walls 166 respectively included in the pair of feed lines 160 may be disposed adjacent to each of the pair of wall panels 120.

In addition, each of the pair of dielectrics 180 may be configured to surround at least a portion of each of the pair of wall panels 120. In this case, when the phase shifter is viewed from a position on top thereof in the height direction, at least a portion of each of the pair of wall panels 120 may be screened with each of the pair of dielectrics 180. In this regard, each of the pair of dielectrics 180 may be spaced apart from each of the at least one base panel 100 in a direction parallel to the height direction.

As in the related art, when the dielectric is disposed parallel to the base surface from the wall surface, the area occupied by the dielectric increases, and the elements are affected by the dielectric. In addition, when the dielectric is formed on the pattern on the PCB, the permittivity is considerably increased, and thus a material made of a ceramic material is additionally formed, which has caused an increase in the overall unit cost and weight of the phase shifter.

In the phase shifter 10 according to an embodiment of the present disclosure, the base panel 100 and the pair of dielectrics 180 may be further spaced apart from each other, and the dielectric 180 is not disposed on the wall panel 120, such that the above problems of the related art may be solved.

In one example, each of the feed base portions 164 respectively included in the pair of feed lines 160 may be disposed on the upper surface of the at least one support body 150. That is, the at least one support body 150 may support the bottom portion of the feed base portion 164 included in each of the pair of feed lines 160. In this case, the pair of feed lines 160 may be stably supported.

In addition, each of the at least one support body 150 may include a pair of first movement prevention portions 300 and a pair of second movement prevention portions 400.

Each of the pair of first movement prevention portions 300 may extend in a direction parallel to the height direction from each of both opposing lateral sides in the transverse direction of each of the at least one support body 150, and accordingly, the movement in the transverse direction of each of the pair of dielectrics 180 may be limited by each of the pair of first movement prevention portions 300.

For example, referring to FIGS. 1 and 3, each of the pair of first movement prevention portions 300 may include a first movement prevention wall 305, and each of the pair of dielectrics 180 may be disposed on one side in the longitudinal direction of the first movement prevention wall 305 facing the wall panel 120.

Each of the pair of second movement prevention portions 400 may extend in a direction parallel to the height direction from each of both opposing sides in the transverse direction of each of the at least one support body 150, and accordingly, the movement in the transverse direction of each of the pair of feed lines 160 may be restricted by each of the pair of second movement prevention portions 400.

For example, referring to FIGS. 1 and 4, each of the pair of second movement prevention portions 400 may include each of a pair of second movement prevention walls 405 spaced apart from each other in the transverse direction, and the feed line 160 may be disposed between the pair of second movement prevention walls 405. In this regard, it is preferable that the transverse directional spacing between the pair of second movement prevention walls 405 corresponds to the transverse directional thickness of the feed line 160.

Referring again to FIGS. 1 and 3, each of the pair of dielectrics 180 may include a first dielectric body 182 and a second dielectric body 184.

At least a portion of the first dielectric body 182 may be disposed between each of the feed walls 166 respectively included in the pair of feed lines 160 and each of the pair of wall panels 120. The second dielectric body 184 is transversally coupled to the first dielectric body 182, and at least a portion thereof is disposed on the opposite side to a side of each of the feed walls 166 respectively included in the pair of feed lines 160 on which the first dielectric body 182 is disposed.

Accordingly, at least a portion of the second dielectric body 184 may be disposed between the pair of feed walls 166. That is, the first dielectric body 182 may be positioned relatively closer to the wall panel 120 than the second dielectric body 184 is, and the feed line 160 may be disposed between the first dielectric body 182 and the second dielectric body 184.

Since each of the pair of dielectrics 180 includes the first dielectric body 182 and the second dielectric body 184, the longitudinal length of one side in the transverse direction of each of the dielectrics 180 and the longitudinal length of the other side in the transverse direction of each of the dielectrics 180 may be freely changed, and the height of the free end of one side in the transverse direction thereof and the height of the free end of the other side in the transverse direction thereof may also be freely changed.

In addition, the second dielectric body 184 may at least partially extend from one surface thereof in a direction parallel to the transverse direction to form a hook portion 186 disposed under the feed wall 166. For example, the hook portion 186 may be located in an empty space defined between the feed wall 166 and the feed base portion 164, and thus may support the bottom of the feed wall 166.

In one example, referring to FIGS. 2 and 4, the driving unit 200 is disposed on one side in the longitudinal direction of the at least one base panel 100, and a pair of guide units 250 are spaced apart from each other in the transverse direction and are configured to reciprocate in a direction parallel to the longitudinal direction according to the driving of the driving unit 200.

In this case, each of the pair of dielectrics 180 may be connected to each of the pair of guide units 250 and be configured to reciprocate in a direction parallel to the longitudinal direction according to the movement of each of the pair of guide units 250. Accordingly, at least a portion of each of the pair of dielectrics 180 may be stably movable in a direction parallel to the longitudinal direction while being positioned between each of the pair of wall panels 120 and each of the pair of feed lines 160.

In the drawing, the first dielectric body 182 is illustrated as being connected to the guide 250. However, the present disclosure is not necessarily limited thereto, and the second dielectric body 184 and the guide 250 may be connected to each other.

The driving unit 200 may include a motor 202 configured to rotate around a motor axis extending in a direction parallel to the horizontal direction, and at least one pinion gear unit 204 configured to rotate around a central axis extending in a direction parallel to the motor axis according to the rotation of the motor 202.

In the phase shifter 10 according to an embodiment of the disclosure, as illustrated in FIGS. 2 and 4, upon receiving the driving force from one motor 202, the pair of guide units 250 are configured to move the pair of dielectrics 180. Accordingly, in order to secure the movement path of the pair of dielectrics 180, an work such as recessing the at least one base panel 100 and the pair of wall panels 120 is not required.

In FIGS. 2 and 4, the at least one pinion gear unit 204 includes two pinion gears 204 spaced apart from each other in the transverse direction. However, the number of pinion gears 204 is not necessarily limited thereto, and the at least one pinion gear unit 204 may include one pinion gear 204.

In this regard, each of the pair of guide units 250 may include a rack gear unit 254 formed on a bottom portion thereof in the height direction and configured to convert a rotational motion of the at least one pinion gear unit 204 into a linear motion. Accordingly, the pair of guide units 250 may be movable in a direction parallel to the longitudinal direction according to the rotational motion of the motor 202, and accordingly, the pair of dielectrics 180 may be movable in a direction parallel to the longitudinal direction.

In addition, for stable coupling between each of the pair of guide units 250 and each of the pair of dielectrics 180, each of the pair of dielectrics 180 may include at least one coupling protrusion (not shown), and each of the pair of guide units 250 may include at least one coupling hole (not shown) formed so as to be coupled to the at least one coupling protrusion.

For example, the at least one coupling protrusion may be formed on an upper surface in the height direction of each of the pair of dielectrics 180, and the at least one coupling hole may be formed in at least one side in the longitudinal direction of each of the pair of guide units 250.

In one example, as shown in FIGS. 1 and 2, when the at least one base panel 100 includes a plurality of base panels 100 spaced apart from each other in the longitudinal direction, the driving unit 200 may be disposed between adjacent ones of the plurality of base panels 100. In addition, the pair of guide units 250 may extend in an elongate manner in a direction parallel to the longitudinal direction, and may be spaced apart from one surface of each of the plurality of base panels 100 in a direction parallel to the height direction such that the pair of guide units 250 do not interfere with the feed base portion 164 so as not to affect the feed base portion 164.

In this case, when the phase shifter is viewed from one side in the transverse direction, at least a portion of each of the pair of guide units 250 may be screened with each of the pair of wall panels 120.

Each of the pair of guide units 250 may be configured to be adjacent to each of the pair of wall panels 120 but not to interfere therewith. In this case, in order to secure movement of the pair of guide units 250 in a direction parallel to the longitudinal direction, the longitudinal extension length of each of the pair of feed lines 160 may be smaller than the longitudinal extension length of each of the pair of wall panels 120.

In one example, each of the pair of guide units 250 is configured to guide the movement of each of the pair of dielectrics 180. Thus, it is preferable that each of the pair of guide units 250 is made of a material that has no electrical effect on the feed line and the dielectric.

In addition, when the at least one base panel 100 includes a plurality of base panels 100 spaced apart from each other in the longitudinal direction, the phase shifter 10 according to an embodiment of the disclosure may further include an upper portion connecting unit 450 disposed between adjacent ones of the plurality of base panels 100 and configured to connect adjacent ones of the plurality of base panels 100 to each other.

For example, the upper portion connecting unit 450 may be detachably coupled to the upper surface in the height direction of each of the pair of guide units 250. When the upper portion connecting unit 450 is mounted on the upper surface in the height direction of each of the pair of guide units 250, the plurality of base panels 100 may constitute one phase shifter group. In this case, the movement and replacement of the components of the phase shifter 10 may be more easily performed.

In one example, when the plurality of base panels 100 constitute one group, it is obvious that several phase shifter groups may be arranged side by side in each of the longitudinal direction and the transverse direction.

For example, referring to FIGS. 3 and 4, it may be identified that an additional phase shifter 10 may be disposed on each of both opposing sides in the transverse direction of the shown phase shifter 10.

Referring to an example in which the phase shifters 10 are arranged in the positive Y-axis direction, the illustrated base panel 100 may be positioned so as to be shifted in the negative Y-axis direction around a center of the pinion gear unit 204, and thus, another base panel 100 may be positioned so as to be shifted in in the positive Y-axis direction around a center of the pinion gear unit 204. In this case, the number of pinion gears 204 may be increased and the position of the motor 202 may be further shifted in the positive Y-axis direction.

In one example, when several phase shifter groups are added so as to be arranged in the longitudinal direction, the driving unit 200, the pair of guide units 250, and the upper portion connecting unit 450 may be added so as to be disposed on one side or each of both opposing sides in the longitudinal direction of each of the two base panels 100 shown in FIGS. 1 and 2.

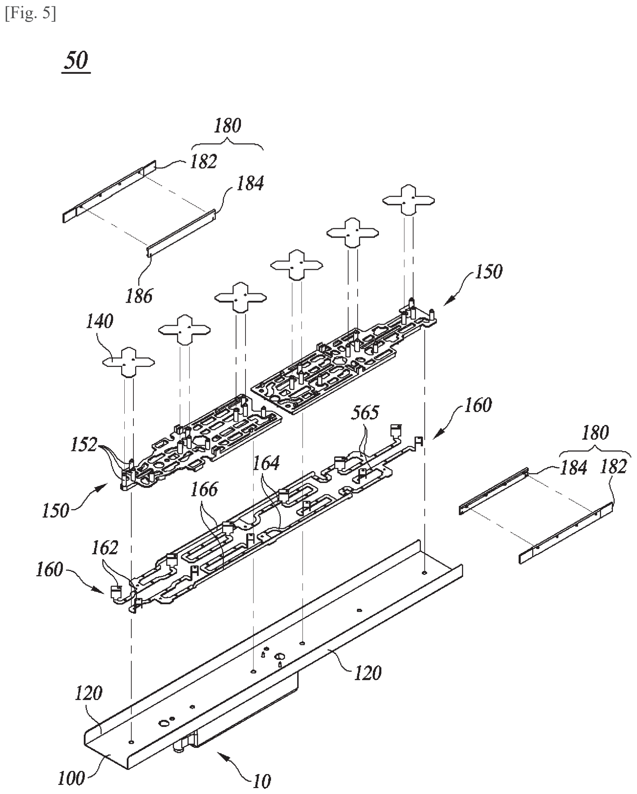

FIG. 5 is a perspective view illustrating a base panel of a phase shifter according to another embodiment of the present disclosure.

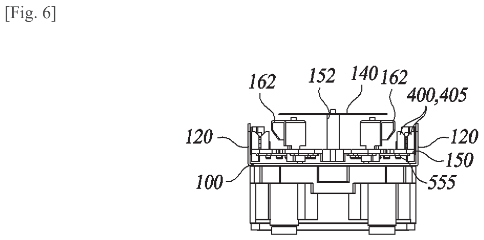

FIG. 6 is a side view of the base panel of FIG. 5.

The description of the phase shifter 10 according to the above-described embodiment may be applied in the same manner to the description of a phase shifter 50 according to another embodiment of the present disclosure except for contents specifically described below.

The phase shifter 50 according to another embodiment of the present disclosure is configured such that each of the feed base portions 164 included in each of the pair of feed lines 160 is disposed on a lower surface of the at least one support body 150. In this case, at least a portion of each of the feed walls 166 included in each of the pair of feed lines 160 may be disposed at a higher vertical position than a vertical position of the at least one support body 150.

In the phase shifter 10 according to the above embodiment of the disclosure, a dielectric loss may occur because the support 150 serving as the dielectric material is disposed between the feed line 160 and the base panel 100. However, in the phase shifter 50 according to another embodiment of the disclosure, the support 150 may not be disposed in a space between the feed line 160 and the base panel 100, thereby reducing the dielectric loss.

In one example, in the phase shifter 50 according to another embodiment of the present disclosure, each of the at least one support body 150 may include at least one second coupling protrusion 555, and each of the pair of feed lines 160 may include at least one second coupling hole 565.

For example, the at least one second coupling protrusion 555 protruding from the lower surface of each of the at least one support body 150 is coupled to the at least one second coupling hole 565, so that the at least one support body 150 may support the pair of feed lines 160. In this case, it is preferable that the number of the at least one second coupling protrusion 555 is the same as the number of the second coupling holes 565 included in the pair of feed lines 160 and the positions thereof correspond to each other.

However, the present disclosure is not limited to the configuration that the coupling protrusion is formed on the support 150 and the coupling hole is defined in the feed line 160. On the contrary, the coupling hole may be defined in the support 150 and the coupling protrusion may be formed on the feed line 160.

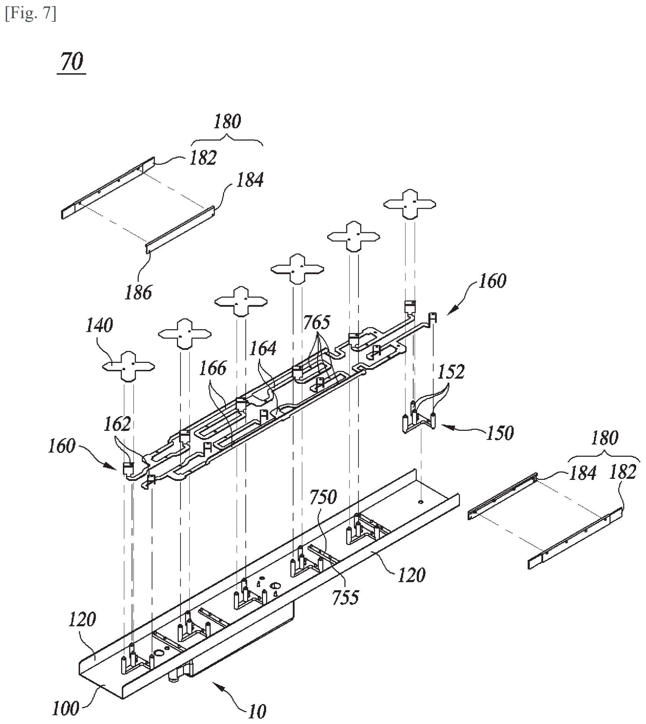

FIG. 7 is a perspective view illustrating a base panel of a phase shifter according to still another embodiment of the present disclosure.

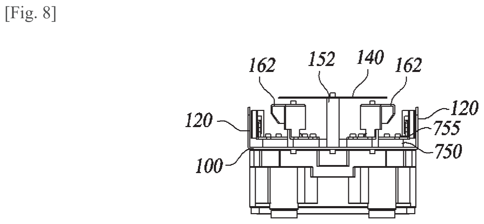

FIG. 8 is a side view of the base panel of FIG. 7.

The description of the phase shifter 10 according to the above-described embodiment may be applied in the same manner to the description of a phase shifter 70 according to still another embodiment of the present disclosure except for contents specifically described below.

The phase shifter 70 according to still another embodiment of the present disclosure is configured to include a plurality of radiation elements 140 and a plurality of support bodies 150. In this regard, the plurality of radiation elements 140 are spaced apart from each other in the longitudinal direction, the plurality of support bodies 150 are spaced apart from each other in the longitudinal direction, and each of the plurality of support bodies 150 is configured to support each of the plurality of radiation elements 140.

In such a structure, the support 150 may not be disposed in the space between the feed line 160 and the base panel 100 as in the phase shifter 70 according to another embodiment of the disclosure, and thus the dielectric loss may be reduced.

In one example, the phase shifter 70 according to still another embodiment of the disclosure may further include at least one fixing bracket 750 disposed between adjacent ones of the plurality of support bodies 150 and configured to protrude in the height direction from one surface of each of the at least one base panel 100.

The at least one fixing bracket 750 is configured such that an upper surface thereof is coupled to the pair of feed lines 160. Thus, the pair of feed lines 160 may be stably supported thereon. In this regard, each of the at least one fixing bracket 750 may include at least one third coupling protrusion 755, and each of the pair of feed lines 160 may include at least one third coupling hole 765.

For example, the at least one third coupling protrusion 755 protruding from the upper surface of each of the at least one fixing bracket 750 is coupled to the at least one third coupling hole 765, so that the at least one fixing bracket 750 may support the pair of feed lines 160. In this case, it is preferable that the number of the at least one third coupling protrusion 755 is the same as the number of the third coupling holes 765 included in the pair of feed lines 160 and the positions thereof correspond to each other.

However, the present disclosure is not limited the configuration that the coupling protrusion is formed on the fixing bracket 750 and the coupling hole is defined in the feed line 160. On the contrary, the coupling hole may be defined in the fixing bracket 750 and the coupling protrusion may be formed on the feed line 160.

The spirit of the present embodiment is illustratively described hereinabove. It will be appreciated by those skilled in the art to which the present embodiment pertains that various modifications and alterations may be made without departing from the essential characteristics of the present embodiment. Accordingly, the present embodiments are not to limit the spirit of the present embodiment, but are to describe the spirit of the present embodiment. The technical idea of the present embodiment is not limited to these embodiments. The scope of the present embodiment should be interpreted by the following claims, and it should be interpreted that all the spirits equivalent to the following claims fall within the scope of the present embodiment.

[DESCRIPTION OF REFERENCE NUMERALS] 10, 50, 70: phase shifter, 100: base panel, 120: wall panel, 140: radiation element, 150: support body, 152: support column, 155: first coupling protrusion, 160: feed line, 165: first coupling hole, 166: feed wall, 180: dielectric, 182: first dielectric body, 184: second dielectric body, 186: hook portion, 200: drive unit, 202: motor, 204: pinion gear unit, 250: pair of guide units, 254: rack gear unit, 300: pair of first movement prevention portions, 305: first movement prevention wall, 400: pair of second movement prevention portions, 405: pair of second movement prevention walls, 450: upper portion connecting unit, 555: second coupling protrusion, 565: second coupling hole, 750: fixing bracket, 755: third coupling protrusion, 765: third coupling hole

### [CROSS-REFERENCE TO RELATED APPLICATION]

This application claims the benefit of and priority to Korea Patent Application No. 10-2023-0058157, filed on May 04, 2023, the entire disclosures of which are hereby incorporated herein by reference in its entirety.

## Claims

1. A phase shifter comprising:
at least one base panel extending in a longitudinal direction;
at least one wall panel extending from at least one of both opposing sides in a transverse direction of each of the at least one base panel in a direction parallel to a height direction perpendicular to the at least one base panel;
at least one support body fixed to one surface of each of the at least one base panel;
at least one feed line supported by the at least one support body so as to be spaced apart from one surface of each of the at least one base panel in the height direction; and
at least one dielectric configured to be movable in a direction parallel to the longitudinal direction, wherein at least a portion of each of the at least one dielectric is disposed between each of the at least one wall panel and each of the at least one feed line.

2. The phase shifter of claim 1, wherein each of the at least one feed line includes:
a feed base portion extending in the longitudinal direction and in a parallel manner to the base panel; and
a feed wall having at least a portion extending from at least one of both opposing sides in a transverse direction of the feed base portion in a direction parallel to the height direction,
wherein at least a portion of each of the at least one dielectric is disposed between the feed wall and each of the at least one wall panel.

3. The phase shifter of claim 2, wherein each feed wall included in each of the at least one feed line is disposed adjacent to each of the at least one wall panel.

4. The phase shifter of claim 2, wherein the at least one dielectric is spaced apart from each of the at least one base panel in the height direction,
wherein each of the at least one dielectric is configured to surround at least a portion of each of the feed walls included in the at least one feed line.

5. The phase shifter of claim 2, wherein each of the feed base portions included in the at least one feed line is disposed on an upper surface of the at least one support body.

6. The phase shifter of claim 2, wherein each of the feed base portions included in the at least one feed line is disposed on a lower surface of the at least one support body,
wherein at least a portion of each of the feed walls included in the at least one feed line is disposed at a vertical position higher than a vertical position of the at least one support body.

7. The phase shifter of claim 1, wherein the at least one dielectric includes a pair of dielectrics spaced apart from each other in the transverse direction,
wherein each of the at least one support body includes a pair of first movement prevention portions respectively extending from both opposing sides in the transverse direction thereof in a direction parallel to the height direction,
wherein each of the pair of first movement prevention portions prevents each of the pair of dielectrics from being moved in the transverse direction.

8. The phase shifter of claim 1, wherein the at least one dielectric includes a pair of dielectrics spaced apart from each other in the transverse direction,
wherein each of the at least one support body includes a pair of second movement prevention portions respectively extending from both opposing sides in the transverse direction thereof in a direction parallel to the height direction,
wherein each of the pair of second movement prevention portions prevents each of the at least one feed line from being moved in the transverse direction.

9. The phase shifter of claim 1, further comprising at least one radiation element disposed on each of the at least one base panel,
wherein each of the at least one support body includes at least one support column corresponding to each of the at least one radiation element and extending in the height direction, wherein the support column has an upper portion coupled to each of the at least one radiation element.

10. The phase shifter of claim 9, wherein each of the at least one feed line includes at least one fixing protrusion configured such that at least a portion thereof protrudes in the height direction and is fixedly disposed between each of the at least one radiation element and each of the at least one support body.

11. The phase shifter of claim 9, further comprising at least one fixing bracket having an upper surface coupled to the at least one feed line,
wherein the at least one radiation element includes a plurality of radiation elements spaced apart from each other in the longitudinal direction,
wherein the at least one support body includes a plurality of support bodies spaced apart from each other in the longitudinal direction,
wherein the at least one fixing bracket is disposed between adjacent ones of the plurality of radiation elements and is configured to protrude from one surface of each of the at least one base panel in the height direction.

12. The phase shifter of claim 2, wherein each of the at least one dielectric includes:
a first dielectric body having at least a portion disposed between each of the feed walls included in the at least one feed line and each of the at least one wall panel; and
a second dielectric body coupled to the first dielectric body in the transverse direction and having at least a portion disposed on a side opposite to a side of each of the feed walls included in the at least one feed line on which the first dielectric body is disposed.

13. The phase shifter of claim 12, wherein the second dielectric body at least partially extends from one surface thereof in a direction parallel to the transverse direction to form a hook portion disposed under the feed wall.

14. The phase shifter of claim 1, wherein the at least one wall panel is formed by bending at least a portion of each of the at least one base panel or is bonded to at least one side of each of the at least one base panel.

15. The phase shifter of claim 2, wherein the feed wall is formed by bending at least a portion of the feed base portion or is bonded to one side of the feed base portion.

16. The phase shifter of claim 1, wherein each of the at least one base panel and the at least one wall panel is made of a metal material.

17. The phase shifter of claim 1, further comprising:
a driving unit disposed on one side in the longitudinal direction of the at least one base panel; and
a pair of guide units spaced apart from each other in the transverse direction and configured to reciprocate in a direction parallel to the longitudinal direction according to driving of the driving unit,
wherein the at least one dielectric includes a pair of dielectrics spaced apart from each other in the transverse direction,
wherein the pair of dielectrics are connected to the pair of guide units, respectively, and are configured to reciprocate in a direction parallel to the longitudinal direction according to movement of the pair of guide units.

18. The phase shifter of claim 17, wherein the driving unit includes:
a motor configured to rotate about a motor axis extending in a direction parallel to the transverse direction; and
at least one pinion gear unit configured to rotate about a central axis thereof extending in a direction parallel to the motor axis according to rotation of the motor,
wherein each of the pair of guide units includes a rack gear unit formed on a bottom in the height direction thereof, wherein the rack gear unit converts a rotational motion of the at least one pinion gear unit into a linear motion.

19. The phase shifter of claim 17, wherein the at least one base panel includes a plurality of base panels spaced apart from each other in the longitudinal direction,
wherein the driving unit is disposed between adjacent ones of the plurality of base panels,
wherein the pair of guide units extend in an elongate manner in a direction parallel to the longitudinal direction and are spaced apart from one surface of each of the plurality of base panels in a direction parallel to the height direction.

20. The phase shifter of claim 19, further comprising an upper portion connecting unit detachably coupled to an upper surface of each of the pair of guide units and configured to connect adjacent ones of the plurality of base panels to each other.
